# EUROPÄISCHE PATENTSCHRIFT

(11) **EP 1 606 145 B1**
(45) Veröffentlichungstag und Bekanntmachung des Hinweises auf die Patenterteilung: **27.09.2006**
(21) Anmeldenummer: 03773555.2
(22) Anmeldetag: 18.10.2003
(51) Int. Cl.: B60R 16/02, H02J 13/00

(54) **VORRICHTUNG FÜR EIN DATEN- UND ENERGIEMANAGEMENT IN EINEM FAHRZEUG**
DEVICE FOR DATA AND ENERGY MANAGEMENT IN A VEHICLE
DISPOSITIF PERMETTANT UNE GESTION DE DONNEES ET D'ENERGIE DANS UN VEHICULE

(30) Priorität: 13.03.2003 DE 10311396
(43) Veröffentlichungstag der Anmeldung: 21.12.2005
(73) Patentinhaber: ROBERT BOSCH GMBH, 70442 Stuttgart (DE)
(72) Erfinder: KRAFT, Dieter, 70839 Gerlingen (DE); SCHLECHTER, Volker, 70825 Korntal (DE); AUPPERLE, Bernd, 71711 Steinheim (DE); HOFFMANN, Norbert, 71679 Asperg (DE)
(86) Internationale Anmeldenummer: PCT/DE2003/003504
(87) Internationale Veröffentlichungsnummer: WO 2004/080764

(56) Entgegenhaltungen:
- WO-A-02/063753
- US-A- 5 637 933
- US-B1- 6 301 528

## Beschreibung

Die Erfindung geht aus von einer Vorrichtung für ein Daten- und Energiemanagement in einem Fahrzeug nach den im Oberbegriff des Anspruchs 1 genannten Merkmalen.

### Stand der Technik

Aus der DE 195 26 809 A1 ist ein Bordnetz mit Multiplexsteuerung für Kraftfahrzeuge bekannt, bei dem elektrische Verbraucher und Schalter über zweiadrige Abzweigeleitungen an einer gemeinsamen, zweiadrigen Energieleitung angeschlossen sind. Die zweiadrigen Abzweigeleitungen enden jeweils in einer mit einem Schalter bzw. Verbraucher verbindbaren Stecker/Verbraucher- bzw. Stecker/Schalter-Kombination, die ihrerseits ein Steuerglied und ein Schaltglied enthält, wobei das Steuerglied aus einem an die Abzweigeleitung angekoppelten Sender/Empfänger für die Kommunikation mit den anderen Steuergliedern, aus einer Schaltelektronik zur Ansteuerung des Schaltgliedes und aus einer Einrichtung zur Überwachung des zum Verbraucher fließenden Stroms besteht.

Nachteilig bei derartigen Bordnetzen ist, dass eine Bordnetzstabilität nicht grundsätzlich gewährleistet werden kann, da nicht allen Verbrauchern, insbesondere denen, die einen hohen Energiebedarf haben, genügend Leistungsressourcen zugeführt werden können.

US-B1-6 301 528 zeigt die Merkmale des Oberbegriffs des Anspruch 1.

### Vorteile der Erfindung

Die erfindungsgemäße Vorrichtung umfasst ein Daten- und Energiemanagement in einem Fahrzeug, wobei Verbindungsmittel vorgesehen sind, über die ein übergeordnetes Steuergerät mit zumindest einer untergeordneten Steueranordnung verbindbar ist. Sowohl das übergeordnete Steuergerät als auch die untergeordneten Steueranordnungen enthalten jeweils eine Schnittstelle zur Datenübertragung, so dass ein an eine untergeordnete Steueranordnung angeschlossener, elektrischer Verbraucher Daten über die Verbindungsmittel mit dem übergeordneten Steuergerät zum Zwecke einer bidirektionalen Kommunikation austauschen kann.

In besonders fahrkritischen Situationen besteht insbesondere bei sicherheitsrelevanten, elektrischen Verbrauchern ein zum Teil gegenüber der normalen Fahrsituation deutlich erhöhter Energiebedarf. So ist beispielsweise bekannt, dass moderne Bremssysteme im Falle einer eingeleiteten Vollbremsung wesentlich mehr elektrische Energie aufwenden müssen, als ihnen vom Bordnetz in diesem Moment zur Verfügung gestellt werden kann. Weitere fahrzeugkritische Situationen ergeben sich beispielsweise bei Vollgas, bei abrupten Lenkbewegungen oder wenn die Kapazität der Fahrzeugbatterie ihren kritischen Zustand erreicht hat. Auch in diesen Fällen muss durch das übergeordnete Steuergerät die Energieversorgung der entsprechenden elektrischen Verbraucher sichergestellt sein. In dem übergeordneten Steuergerät ist hierzu ein übergeordnetes Schaltmittel vorgesehen, mit dem in besonders vorteilhafter Weise gezielt ein Verbindungsmittel deaktiviert und/oder aktiviert werden kann, wenn durch eine mit einem anderen Verbindungsmittel verbundene Steueranordnung ein Energiebedarf angefordert wird, der deutlich über das für den normalen Fahrzeugbetrieb übliche Maß hinausgeht.

In einer zweckmäßigen Weiterbildung sind innerhalb des übergeordneten Steuergeräts Mittel zum Abspeichem des Zustands der zumindest einen untergeordneten Steueranordnung und/oder des zumindest einen elektrischen Verbrauchers vorgesehen. Auf diese Weise können Fehlerereignisse im gesamten Bordnetz des Fahrzeugs dokumentiert und beispielsweise für Vertragswerkstätten zur Verfügung gestellt werden.

Darüber hinaus umfasst das übergeordnete Steuergerät in einer bevorzugten Ausgestaltung zumindest ein Stromerfassungsmittel, das einen über das übergeordnete Schaltmittel fließenden Gesamtstrom aller mit dem selben Verbindungsmittel verbundenen, aktiven, elektrischen Verbraucher detektiert. Somit ist es in vorteilhafter Weise möglich, dieses mit dem übergeordneten Schaltmittel verbundene Verbindungsmittel selektiv zu deaktivieren, wenn der fließenden Gesamtstrom einen vorgegebenen Grenzwert überschritten hat.

In einer zweckmäßigen Weiterbildung sieht die Erfindung vor, dass die Verbindungsmittel neben einer ersten Versorgungsleitung eine weitere Versorgungsleitung enthalten, die über einen übergeordneten Spannungswandler des übergeordneten Steuergeräts mit einer gegenüber der ersten Versorgungsleitung unterschiedlichen Spannung versorgt wird. Somit ist es in einer sehr kosten- und platzsparenden Weise möglich, ein Mehrspannungsbordnetz für Kraftfahrzeuge ohne zusätzlichen Aufwand umzusetzen.

Ein weiterer Vorteil der Erfindung ergibt sich dadurch, dass die Verbindungsmittel des Bordnetzes neben der zumindest einen Versorgungsleitung eine weitere Versorgungsleitung als Ruhestromleitung enthalten, mit der die elektrischen Verbraucher redundant versorgbar sind. Auf diese Weise ist gewährleistet, dass sicherheitsrelevante Verbraucher, wie beispielsweise lenkungsunterstützende Elektromotoren selbst bei einer Unterbrechung der Versorgungsleitung für den gefahrlosen Fahrzeugbetrieb zur Verfügung stehen. Außerdem ist durch die Ruhestromleitung eine Versorgung von elektrischen Verbrauchern gewährleistet, die auch im abgestellten und/oder verschlossenen Fahrzeug aktiv sein müssen. Als Beispiel wäre hier die Sende-Empfangs-Elektronik für ein fahrzeugeigenes Schließsystem zu nennen.

Weitere zweckmäßige Weiterbildungen ergeben sich aus weiteren, abhängigen Ansprüchen und aus der Beschreibung.

### Zeichnungen

In den Zeichnungen ist ein Ausführungsbeispiel des erfindungsgemäßen Daten- und Energiemanagements für ein Fahrzeug dargestellt, das in der nachfolgenden Beschreibung näher erläutert werden soll. Die Figuren der Zeichnungen, deren Beschreibung sowie die Ansprüche enthalten zahlreiche Merkmale in Kombination. Ein Fachmann wird diese Merkmale auch einzeln betrachten und zu weiteren, sinnvollen Kombinationen zusammenfassen.

Es zeigen
- Figur 1: eine schematische Darstellung einer möglichen Ausgestaltung für ein Daten- und Energiemanagement in einem Fahrzeug,
- Figur 2: eine schematische Darstellung einer möglichen Ausgestaltung für ein übergeordnetes Steuergerät,
- Figur 3: eine schematische Darstellung einer möglichen Ausgestaltung für eine untergeordnete Steueranordnung und
- Figur 4: eine schematische Darstellung einer möglichen Ausgestaltung für die Kontaktierung der untergeordneten Steueranordnung mit einem Verbindungsmittel.

### Beschreibung einer bevorzugten Ausführungsform

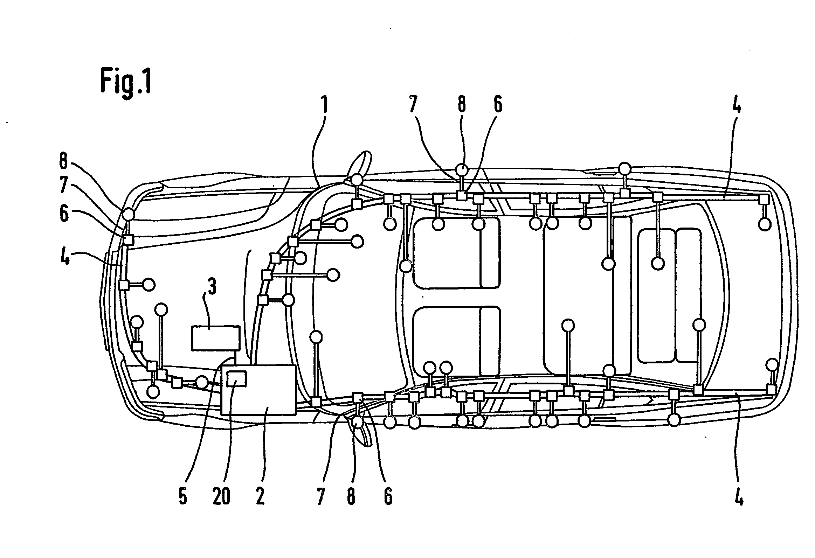

In Figur 1 ist eine Vorrichtung für ein Daten- und Energiemanagement in einem Fahrzeug 1 dargestellt, die im Folgenden auch kurz als Bordnetz bezeichnet werden soll. Das Bordnetz enthält zumindest ein als Stichleitung ausgeführtes Verbindungsmittel 4, das sternpunktförmig mit einem übergeordneten Steuergerät 2 verbunden ist. Durch die sternpunktförmige Anordnung der Verbindungsmittel 4 im Fahrzeug werden voneinander unabhängige Energiebereiche geschaffen. Vorzugsweise ist das zumindest eine Verbindungsmittel 4 als Flachbandkabel ausgeführt. Auf diese Weise ist eine erhebliche Gewichts- und Bauraumreduzierung gegenüber konventionellen Kabelbäumen gewährleistet. Über ein Batterieverbindungsmittel 5, das mit Hilfe eines Batterieschaltmittels 20 deaktiviert oder aktiviert werden kann, besteht eine direkte Verbindung des übergeordneten Steuergeräts 2 mit einer Fahrzeugbatterie 3. Entlang der Stichleitung ist zumindest ein elektrischer Verbraucher 8, beispielsweise ein Scheibenhebermotor, eine Sitzheizung, ein Bremskraftverstärker, ein Scheinwerfer oder dergleichen, angeordnet und über jeweils eine Abzweigeleitung 7 mittels einer untergeordneten Steueranordnung 6 an die Stichleitung kontaktiert. Um sowohl sicherheitsrelevante als auch weniger sicherheitsrelevante, elektrischer Verbraucher, die örtlich dicht beieinander liegen, unterscheidbar zu versorgen, ist es möglich, einen Bereich des Fahrzeugs 1 mit mehreren, parallelen Verbindungsmitteln 4 auszustatten.

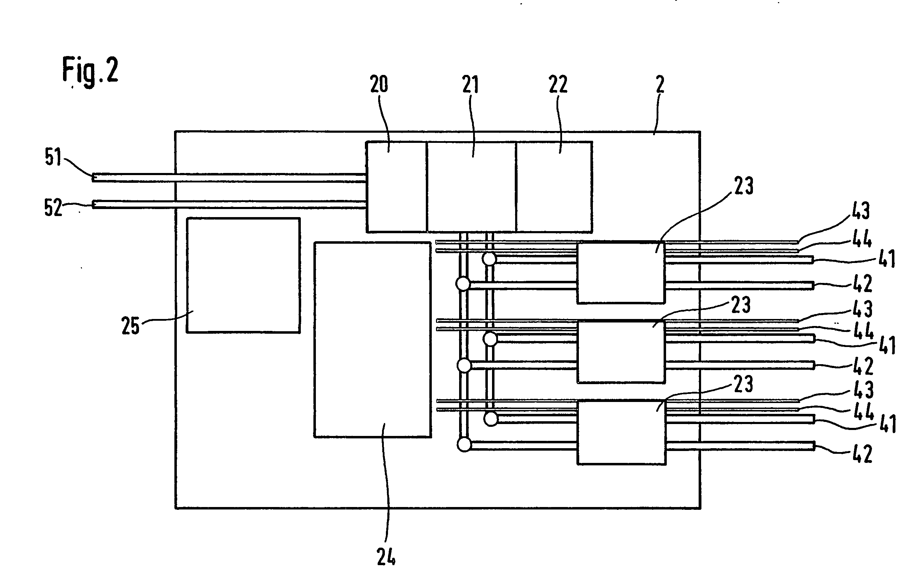

Figur 2 zeigt ein schematisches Ausführungsbeispiel des übergeordneten Steuergeräts 2. Es besteht im Wesentlichen aus einem übergeordneten Batterieschaltmittel 20, einem übergeordneten Stromerfassungsmittel 21, einem übergeordneten Spannungswandler 22, zumindest einem übergeordneten Schaltmittel 23, einer übergeordneten Schnittstelle 24 sowie aus Mitteln zur Abspeicherung 25. Das übergeordnete Steuergerät 2 bildet den Sternpunkt des Bordnetzes und ist zum Einen über das Batterieschaltmittel 20 und das Batterieverbindungsmittel 5 direkt mit der Fahrzeugbatterie 3 sowie zum Anderen über die übergeordneten Schaltmittel 23 und die als Stichleitung ausgeführten Verbindungsmittel 4 mit den untergeordneten Steueranordnungen 6 verbunden. Dabei besteht das Batterieverbindungsmittel 5 aus zumindest einer ersten Batterieversorgungsleitung 51 zur Energieversorgung, während die Masseverbindung über die Fahrzeugkarosserie sichergestellt ist. In einer weiteren Ausgestaltung kann die Masseverbindung jedoch auch über eine zweite Batterieversorgungsleitung 52, die Bestandteil des Batterieverbindungsmittels 5 ist, angedacht sein. Zudem ist es möglich, im Falle mehrerer Fahrzeugbatterien weitere Versorgungsleitungen und/oder Batterieverbindungsmittel vorzusehen.

Das zumindest eine als Stichleitung ausgeführte Verbindungsmittel 4 ist als Hybridkabel aufgebaut, welches aus zumindest einer ersten Versorgungsleitung 41 zur Energieversorgung der elektrischen Verbraucher 8 und/oder aus zumindest einer ersten Datenleitung 43 besteht. Ist jeweils nur eine Versorgungs- und/oder Datenleitung vorgesehen, so dient die Fahrzeugkarosserie als gemeinsame Masseverbindung für die Energie- und Datenübertragung. In einer weiteren Ausgestaltung kann das Verbindungsmittel 4 jedoch auch aus zumindest einer weiteren Versorgungsleitung 42 und/oder Datenleitung 44 bestehen, um Daten und Energie völlig autark voneinander zu übertragen. Andererseits kann es im Sinne einer Powerline-Verbindung auch angedacht sein, Energie und Daten auf einer gemeinsamen Leitung 41 zu übertragen, während entweder die Fahrzeugkarosserie oder aber auch die Leitung 42, 43, 44 als Masseverbindung dient. Um sicherheitsrelevante Verbraucher 8 redundant zu versorgen und/oder eine Versorgung von elektrischen Verbrauchern 8 sicherzustellen, die im abgestellten Fahrzeug 1 aktiv sein müssen, beispielsweise die Sende-Empfangs-Elektronik für ein fahrzeugeigenes Schließsystem, kann darüber hinaus die eine weitere Versorgungsleitung 42 als Ruhestromleitung ausgelegt sein. In Verbindung mit dem übergeordneten Spannungswandler 22 des übergeordneten Steuergeräts 2 ist zudem ein Mehrspannungsbordnetz mit einer ersten Versorgungsspannung von beispielsweise 12 Volt und zumindest einer weiteren Versorgungsspannung von zum Beispiel 42 Volt angedacht. In diesem Fall kann die zumindest eine weitere Versorgungsleitung 42 gegenüber der ersten Versorgungsleitung 41 mit einer anderen Spannung versorgt werden. Weitere mögliche Ausgestaltungen des zumindest einen Verbindungsmittels 4 ergeben sich in Abhängigkeit von zusätzlichen Kriterien, wie beispielsweise die erforderliche Zuverlässigkeit, das Vorsehen redundanter Rückfallebenen und/oder das Berücksichtigen bestimmter Aufweck- und Einschaltkonzepte.

Die übergeordnete Schnittstelle 24 des übergeordneten Steuergeräts 2 dient zum Austausch von Daten des zumindest einen elektrischen Verbrauchers 8 mit der zumindest einen untergeordneten Steueranordnung 6 über die Datenleitung 43, 44 des zumindest einen Verbindungsmittels 4 im Sinne einer bidirektionalen Kommunikation. Wird über die Datenleitung 43, 44 eine Energieanforderung durch die zumindest eine untergeordnete Steueranordnung 6 an das übergeordnete Steuergerät 2 gesendet, so kann das übergeordnete Steuergerät 2 mit Hilfe des zumindest einen übergeordneten Schaltmittels 23 gezielt zumindest ein weiteres Verbindungsmittel 4 deaktivieren und/oder aktivieren, um der gewünschten Energieanforderung gerecht zu werden. Dies ist beispielsweise im Falle einer Vollbremsung erforderlich. Um den Bremskraftverstärker mit ausreichend Energie versorgen zu können, schaltet das übergeordnete Steuergerät 2 zum Beispiel kurzzeitig dasjenige Verbindungsmittel 4 ab, über das weniger sicherheitsrelevante Verbraucher im Armaturenbereich des Fahrzeugs, wie die Armaturenbeleuchtung, das Autoradio, die Klimaanlage, etc., mit Energie versorgt werden.

In dem übergeordneten Steuergerät 2 ist weiterhin ein übergeordnetes Stromerfassungsmittel 21 vorgesehen, das den über das zumindest eine übergeordnete Schaltmittel 23 fließenden Gesamtstrom sämtlicher mit dem selben Verbindungsmittel 4 verbundenen, aktiven, elektrischen Verbraucher 8 detektiert. Überschreitet der fließende Strom einen vorgegebenen Grenzwert, beispielsweise im Falle eines Kurzschlusses, so kann das übergeordnete Steuergerät 2 mit Hilfe des zumindest einen übergeordneten Schaltmittels 23 selektiv genau dasjenige Verbindungsmittel 4 deaktivieren, in dem die Stromüberschreitung auftritt.

Schließlich enthält das übergeordnete Steuergerät 2 Speichermittel 25, in denen der Zustand der zumindest einen untergeordneten Steueranordnung 6 und/oder des zumindest einen elektrischen Verbrauchers 8 zum Zwecke einer späteren Fehlerdiagnose hinterlegt werden kann.

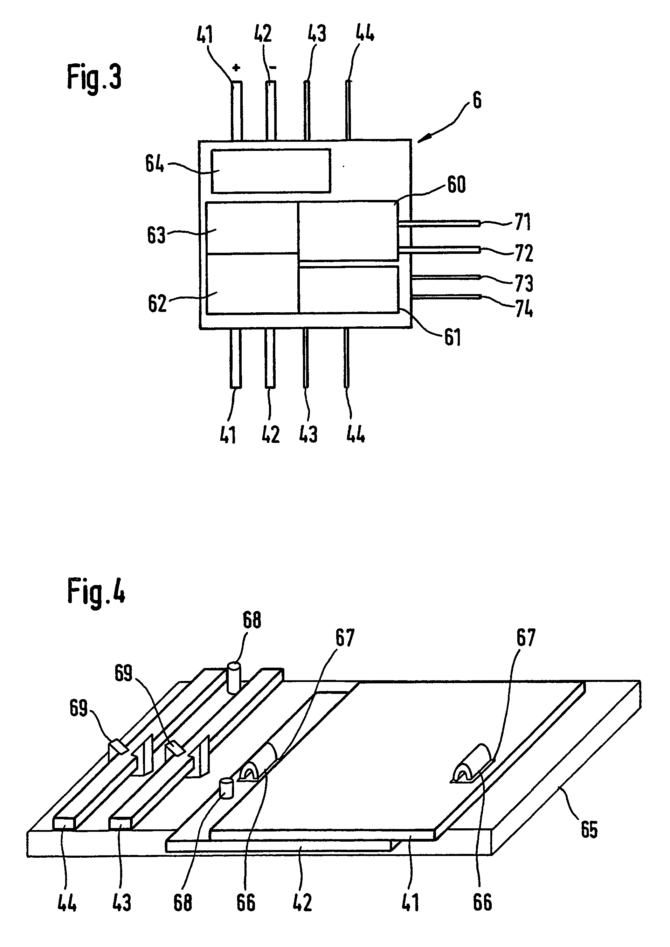

Figur 3 zeigt exemplarisch eine schematische Darstellung der untergeordneten Steueranordnung 6. Diese besteht beispielsweise aus zumindest einem untergeordneten Schaltmittel 60, einer untergeordneten Schnittstelle 61, einem untergeordneten Stromerfassungsmittel 62, einer untergeordneten Schaltlogik 63 sowie einem untergeordneten Spannungswandler 64. Die untergeordnete Steueranordnung 6 stellt das Verbindungsstück zwischen dem Verbindungsmittel 4 und dem mittels der Abzweigeleitung 7 verbundenen, elektrischen Verbraucher 8 dar. Je nach Auslegung des elektrischen Verbrauchers 8 können für die Abzweigeleitung 7 eine oder mehrere Versorgungsleitungen 71, 72 und/oder Datenleitungen 73, 74 vorgesehen sein. Über die untergeordnete Schnittstelle 61 ist eine Datenkommunikation zwischen dem elektrischen Verbraucher 8 und dem Bordnetz möglich. Neben einer Verbindung zum übergeordneten Steuergerät 2 ist dabei auch eine direkte Kommunikation zwischen den untergeordneten Steuergeräten 6 bzw. den mit ihnen verbundenen, elektrischen Verbrauchern 8 vorgesehen.

Die Schaltfunktion zur Energieversorgung eines angeschlossenen, elektrischen Verbrauchers 8 wird über das beispielsweise als Leistungshalbleiter ausgeführte, zumindest eine untergeordnete Schaltmittel 60 realisiert. Mit Hilfe des Stromerfassungsmittels 62 kann der über das zumindest eine untergeordnete Schaltmittel 60 fließende Strom zum elektrischen Verbraucher 8 detektiert und der untergeordneten Schaltlogik 63 zugeführt werden. Ebenso ist es angedacht, untergeordnete Spannungserfassungsmittel vorzusehen zur Erfassung der Versorgungsspannung vor und/oder nach dem zumindest einen untergeordneten Schaltmittel 60. In Abhängigkeit von der gemessenen Strom- und/oder Spannungsgröße können dann unterschiedliche Fehlerbilder des elektrischen Verbrauchers 8, wie zum Beispiel eine Leitungsunterbrechung, ein Kurzschluss oder ein Spannungseinbruch am elektrischen Verbraucher 8 detektiert und zur Abspeicherung an das übergeordnete Steuergerät 2 übermittelt werden. Zudem gestatten die untergeordneten Spannungserfassungsmittel eine Überwachung des zumindest einen Verbindungsmittels 4 zwischen zwei benachbarten, untergeordneten Steueranordnungen 6. Auf diese Weise ist es beispielsweise möglich, Kabelbrüche des zumindest einen Verbindungsmittels 4 in einer sehr einfachen Art und Weise zu lokalisieren. Weiterhin ist vorgesehen, das zumindest eine untergeordnete Schaltmittel 60 in Abhängigkeit des gemessenen Stromes durch die untergeordnete Schaltlogik 63 anzusteuern, so dass das untergeordnete Steuergerät 6 als Ersatz einer bei üblichen Fahrzeugen erforderlichen Schmelzsicherung dient. In Verbindung mit der Möglichkeit einer direkten Kommunikation zwischen untergeordneten Steueranordnungen 6 kann dann die Funktion eines deaktivierten bzw. nicht mehr aktivierbaren, elektrischen Verbrauchers 8 durch einen eine Ersatzfunktion ausführenden, elektrischen Verbraucher 8 übernommen werden. So ist es beispielsweise denkbar, dass im Falle des Ausfalls eines Bremslichtes, diese Funktion solange durch das benachbarte Rücklicht übernommen wird, bis das Bremslicht wieder funktionsfähig ist. Die lokale Detektierung und Auswertung von Fehlerbildern an dem elektrischen Verbraucher 8 kann demnach zur Abschaltung des elektrischen Verbrauchers 8 durch die untergeordnete Steueranordnung 6 und/oder zur Deaktivierung des diesen Verbraucher 8 mit dem übergeordneten Steuergerät 2 verbindenden Verbindungsmittels 4 durch das übergeordnete Steuergerät 2 verwendet werden.

In der untergeordneten Steueranordnung 6 ist schließlich noch ein untergeordneter Spannungswandler 64 vorgesehen. Er dient in erster Linie zur elektrischen Versorgung aller in der untergeordneten Steueranordnung 6 enthaltenen Baugruppen 60, 61, 62, 63. Darüber hinaus kann der untergeordnete Spannungswandler 64 aber auch als Spannungsquelle verwendet werden, um den Zustand von mit der untergeordneten Steueranordnung 6 verbundenen Schaltelementen der elektrischen Verbraucher 8, wie beispielsweise Relais oder dergleichen, zu erfassen.

Um die Modularität und die Verwendung der untergeordneten Steueranordnung 6 flexibel und wirtschaftlich zu gestalten, können beispielsweise weitere untergeordnete Schaltmittel zum Zwecke einer erhöhten Schaltleistung oder für unterschiedliche Schaltfunktionen wie zum Beispiel eine H-Brücke zur Motoransteuerung vorgesehen sein. Darüber hinaus ist es denkbar, die untergeordnete Steueranordnung 6 lediglich zur reinen Datenerfassung, beispielsweise in Verbindung mit den bereits erwähnten Schaltelementen und/oder mit Licht-, Druck- bzw. Schallsensoren, zu verwenden. Auf das zumindest eine untergeordnete Schaltmittel 60 könnte in diesem Fall verzichtet werden.

In Figur 4 ist eine mögliche Kontaktierung der zumindest einen untergeordneten Steueranordnung 6 mit dem zumindest einen Verbindungsmittel 4 dargestellt. Zu erkennen ist ein Sockel 65 der untergeordneten Steueranordnung 6 sowie zumindest ein Kontaktmittel 66, 69 zur elektrischen Verbindung mit dem Verbindungsmittel 4 und ein Fixiermittel 68. Das Verbindungsmittel 4 ist beispielsweise als Flachbandkabel ausgeführt mit der bereits erwähnten zumindest einen Versorgungsleitung 41, 42 und/oder der zumindest einen Datenleitung 43, 44. Aufgrund der wesentlich höheren, elektrischen Belastbarkeit weist die Versorgungsleitung 41, 42 in vorteilhafter Weise einen größeren Querschnitt auf als die Datenleitung 43, 44. Um Raum zu sparen, ist es zudem von Vorteil, im Falle mehrere, einzeln isolierter Versorgungsleitungen 41, 42, diese gemäß Figur 4 überlappend anzuordnen. Die Kontaktierung zwischen der untergeordneten Steueranordnung 6 und dem Verbindungsmittel 4 erfolgt nun beispielsweise derart, dass die Flachbandleitungen 41, 42, 43, 44 weder unterbrochen noch getrennt werden. Dazu können an jeder beliebigen Stelle des Verbindungsmittels 4 Stanzlöcher 67 vorgesehen werden, die die Flachbandleitung nur im unmittelbaren Bereich der Kontaktstelle freilegen. Beim Aufsetzen eines in Figur 4 nicht gezeigten Deckels der untergeordneten Steueranordnung 6 werden dann die beispielsweise als Bügelfedern ausgeführten Kontaktmittel 66 in die Stanzlöcher 67 gedrückt und eine elektrische Verbindung zwischen dem Verbindungsmittel 4 und der untergeordneten Steueranordnung 6 hergestellt. Im Falle der relativ schmal ausgeführten Datenleitungen 43, 44 kann eine Kontaktierung auch durch Klemmkontakte 69 erfolgen, die die Flachbandleitungen an der entsprechend vorgesehen Stelle umschließen. In vorteilhafter Weise werden die Kontaktmittel 66, 69 der untergeordneten Steueranordnung 6 derart auf dem Sockel 65 angeordnet, dass eine Verpolung auszuschließen ist. Dies geschieht beispielsweise durch unterschiedlich große Stanzlöcher 67 und Kontaktmittel 66, 69 und/oder durch eine versetzte Anordnung der Stanzlöcher 67 und der Kontaktmittel 66, 69 und/oder durch zusätzlich angebrachte Fixiermittel 68. Ein Verdrehen oder Verrutschen der untergeordneten Steueranordnung 6 auf dem Verbindungsmittel 4 ist somit auszuschließen. Neben der hier geschilderten Möglichkeit zur Kontaktbildung zwischen untergeordneter Steueranordnung 6 und Verbindungsmittel 4 können auch noch andere Verbindungstechniken wie zum Beispiel eine Schraubverbindung oder eine Kontaktierung mit bereits vorbereiteten Stanzlöchern im Sinne einer Perforierung angedacht sein.

Sockel 65 und Deckel der untergeordnete Steueranordnung 6 bilden im zusammengesetzten Zustand eine geschlossene Einheit, die gegen das Eindringen von Schmutz und Feuchtigkeit geschützt ist. Dabei sind in vorteilhafter Weise die gesamte Elektronik 60, 61, 62, 63, 64 inklusive Kühlmittel und die fest angeschlossene Abzweigeleitung 7 im Deckel der untergeordneten Steueranordnung 6 untergebracht.

Die erfindungsgemäße Vorrichtung für ein Daten- und Energiemanagement in einem Fahrzeug ist nicht auf das in der Beschreibung aufgeführte Ausführungsbeispiel beschränkt. Gleiches gilt im Übrigen für das erfindungsgemäße, übergeordnete Steuergerät 2, die erfindungsgemäße, untergeordnete Steueranordnung 6 und das erfindungsgemäße Verbindungsmittel 4. Darüber hinaus ist die erfindungsgemäße Vorrichtung für ein Daten- und Energiemanagement nicht beschränkt auf die Anwendung in einem Fahrzeug.

## Patentansprüche

1. Vorrichtung für ein Daten- und Energiemanagement in einem Fahrzeug (1) mit Verbindungsmitteln (4), über die ein übergeordnetes Steuergerät (2) mit zumindest einer untergeordneten Steueranordnung (6) verbindbar ist, wobei das übergeordnete Steuergerät (2) eine übergeordnete Schnittstelle (24) und die zumindest eine untergeordnete Steueranordnung (6) jeweils eine untergeordnete Schnittstelle (61) aufweisen, mit denen das übergeordnete Steuergerät (2) und die zumindest eine untergeordnete Steueranordnung (6) Daten zumindest eines elektrischen Verbrauchers (8) über die Verbindungsmittel (4) zum Zwecke einer bidirektionalen Kommunikation austauschen,
**dadurch gekennzeichnet,**
- **dass** im Falle einer Energieanforderung durch die zumindest eine untergeordnete Steueranordnung (6) über ein erstes Verbindungsmittel (4) gezielt zumindest ein weiteres Verbindungsmittel (4) durch zumindest ein übergeordnetes Schaltmittel (23) des übergeordneten Steuergeräts (2) deaktivierbar und/oder aktivierbar ist, um der gewünschten Energieanforderung gerecht zu werden.

2. Vorrichtung nach Anspruch 1, **dadurch gekennzeichnet, dass** das übergeordnete Steuergerät (2) Mittel enthält zum Abspeichern (25) des Zustandes der zumindest einen untergeordneten Steueranordnung (6) und/oder des zumindest einen elektrischen Verbrauchers (8).

3. Vorrichtung nach einem der vorhergehenden Ansprüche, **dadurch gekennzeichnet, dass** das übergeordnete Steuergerät (2) zumindest ein übergeordnetes Stromerfassungsmittel (21) enthält, das einen über das zumindest eine übergeordnete Schaltmittel (23) fließenden Gesamtstrom aller mit dem selben Verbindungsmittel (4) verbundenen, aktiven, elektrischen Verbraucher (8) detektiert und dieses Verbindungsmittel (4) selektiv deaktiviert, wenn der fließende Gesamtstrom einen vorgegebenen Grenzwert überschreitet.

4. Vorrichtung nach Anspruch 1 oder 2, **dadurch gekennzeichnet, dass** die untergeordnete Steueranordnung (6) mit zumindest einem untergeordneten Stromerfassungsmittel (62) ausgestattet ist, das den über zumindest ein untergeordnetes Schaltmittel (60) fließenden Strom detektiert und einer untergeordneten Schaltlogik (63) zur Auswertung zuführt, in Abhängigkeit dessen das untergeordnete Schaltmittel (60) ansteuerbar ist.

5. Vorrichtung nach einem der vorhergehenden Ansprüche, **dadurch gekennzeichnet, dass** die untergeordnete Steueranordnung (6) einen Spannungswandler (64) enthält, der als Spannungsquelle verwendbar ist, um den Zustand von mit der untergeordneten Steueranordnung (6) verbundenen Schaltelementen des zumindest einen elektrischen Verbrauchers (8) zu erfassen.

6. Vorrichtung nach einem der vorhergehenden Ansprüche, **dadurch gekennzeichnet, dass** in der zumindest einen untergeordneten Steueranordnung (6) untergeordnete Spannungserfassungsmittel vorgesehen sind zur Erfassung der Versorgungsspannung, mit der der zumindest eine elektrische Verbraucher (8) versorgt wird.

7. Vorrichtung nach Anspruch 6, **dadurch gekennzeichnet, dass** die untergeordneten Spannungserfassungsmittel eine Überwachung des zumindest einen Verbindungsmittels (4) zwischen zwei benachbarten, untergeordneten Steueranordnungen (6) ermöglichen.

8. Vorrichtung nach einem der vorhergehenden Ansprüche, **dadurch gekennzeichnet, dass** in der zumindest einen untergeordneten Steueranordnung (6) Kontaktmittel (66, 69) zur Verbindung mit dem zumindest einen Verbindungsmittel (4) vorgesehen sind, die derart ausgelegt sind, dass eine Verpolung auszuschließen ist.

9. Vorrichtung nach einem der vorhergehenden Ansprüche, **dadurch gekennzeichnet, dass** die Daten der untergeordneten Steueranordnungen (6) über das zumindest eine Verbindungsmittel (4) im Sinne einer direkten Kommunikation miteinander austauschbar sind.

10. Vorrichtung nach Anspruch 9, **dadurch gekennzeichnet, dass** in Verbindung mit der direkten Kommunikation zwischen untergeordneten Steueranordnungen (6) die Funktion eines deaktivierten bzw. nicht mehr aktivierbaren, elektrischen Verbrauchers (8) durch einen eine Ersatzfunktion ausführenden, elektrischen Verbraucher (8) übernehmbar ist.

11. Vorrichtung nach einem der vorhergehenden Ansprüche, **dadurch gekennzeichnet, dass** das zumindest eine Verbindungsmittel (4) als Flachbandleitung mit zumindest einer Versorgungsleitung (41, 42) und/oder zumindest einer Datenleitung (43, 44) ausgeführt ist.

12. Vorrichtung nach Anspruch 11, **dadurch gekennzeichnet, dass** die Flachbandleitung als Stichleitung ausgeführt ist, die von einem gemeinsamen Sternpunkt (2) ausgeht.

13. Vorrichtung nach einem der vorhergehenden Ansprüche, **dadurch gekennzeichnet, dass** bei einem Mehrspannungsbordnetz ein übergeordneter Spannungswandler (22) des übergeordneten Steuergeräts (2) eine weitere Versorgungsleitung (42) des zumindest einen Verbindungsmittels (4) gegenüber der zumindest einen Versorgungsleitung (41) mit einer anderen Spannung versorgt.

14. Vorrichtung nach einem der vorhergehenden Ansprüche, **dadurch gekennzeichnet, dass** die eine weitere Versorgungsleitung (42) des zumindest einen Verbindungsmittels (4) als Ruhestromleitung ausgelegt ist, mit der sicherheitsrelevante Verbraucher (8) redundant versorgbar sind und/oder eine Versorgung von elektrischen Verbrauchern (8) sichergestellt ist, die im abgestellten Fahrzeug (1) aktiv sein müssen.

## Claims

1. Device for data and energy management in a vehicle (1) having connecting means (4) by means of which a superordinate control device (2) can be connected to at least one subordinate control arrangement (6), the superordinate control device (2) having a superordinate interface (24), and the at least one subordinate control arrangement (6) having in each case a subordinate interface (61), with which interfaces (24, 61) the superordinate control device (2) and the at least one subordinate control arrangement (6) exchange data at least of one electric load (8) via the connecting means (4) for the purpose of bidirectional communication, **characterized**
- **in that** in the event of an energy request by the at least one subordinate control arrangement (6) via a first connecting means (4), at least one further connecting means (4) can be selectively deactivated and/or activated by means of at least one superordinate switching means (23) of the superordinate control device (2) in order to satisfy the desired energy request.

2. Device according to Claim 1, **characterized in that** the superordinate control device (2) contains means for storing (25) the state of the at least one subordinate control arrangement (6) and/or of the at least one electric load (8).

3. Device according to one of the preceding claims, **characterized in that** the superordinate control device (2) contains at least one superordinate current-sensing means (21) which detects a total current, flowing via the at least one superordinate switching means (23), of all the active, electric loads (8) which are connected to the same connecting means (4), and selectively deactivates these connecting means (4) if the flowing total current exceeds a predefined limiting value.

4. Device according to Claim 1 or 2, **characterized in that** the subordinate control arrangement (6) is equipped with at least one subordinate current-sensing means (62) which detects the current flowing via at least one subordinate switching means (60) and feeds it to a subordinate switching logic (63) for evaluation, as a function of which current-sensing means (62) the subordinate switching means (60) can be actuated.

5. Device according to one of the preceding claims, **characterized in that** the subordinate control arrangement (6) contains a voltage transformer (64) which can be used as a voltage source in order to sense the state of switching elements of the at least one electric load (8) which are connected to the subordinate control arrangement (6).

6. Device according to one of the preceding claims, **characterized in that** subordinate voltage-sensing means for sensing the supply voltage with which the at least one electric load (8) is supplied are provided in the at least one subordinate control arrangement (6).

7. Device according to Claim 6, **characterized in that** the subordinate voltage-sensing means permit the at least one connecting means (4) between two adjacent subordinate control arrangements (6) to be monitored.

8. Device according to one of the preceding claims, **characterized in that** contact means (66, 69) for connecting to the at least one connecting means (4) which are configured in such a way that polarity reversal is ruled out are provided in the at least one subordinate control arrangement (6).

9. Device according to one of the preceding claims, **characterized in that** the data items of the subordinate control arrangements (6) can be exchanged with one another via the at least one connecting means (4) in the sense of direct communication.

10. Device according to Claim 9, **characterized in that**, in conjunction with the direct communication between subordinate control arrangements (6), it is possible for the function of an electric load (8) which is deactivated or can no longer be activated to be assumed by an electric load (8) which carries out an equivalent function.

11. Device according to one of the preceding claims, **characterized in that** the at least one connecting means (4) is embodied as a flat ribbon line with at least one supply line (41, 42) and/or at least one data line (43, 44).

12. Device according to Claim 11, **characterized in that** the flat ribbon line is embodied as a spur line which starts from a common star point (2).

13. Device according to one of the preceding claims, **characterized in that** in a multi-voltage on-board vehicle supply system a superordinate voltage transformer (22) of the superordinate control device (2) supplies a further supply line (42) of the at least one connecting means (4) with a different voltage from that of the at least one supply line (41).

14. Device according to one of the preceding claims, **characterized in that** the one further supply line (42) of the at least one connecting means (4) is embodied as a quiescent current line with which safety-related loads (8) can be supplied in a redundant fashion and/or a supply to electric loads (8) which have to be active when the vehicle (1) is deactivated is ensured.

## Revendications

1. Dispositif permettant une gestion de données et d'énergie dans un véhicule (1) avec des moyens de raccordement (4) reliant un appareil de commande prioritaire (2) à au moins un dispositif de commande subordonné (6), l'appareil de commande prioritaire (2) comprenant une interface prioritaire (24) et chaque dispositif de commande subordonné (6) comprenant une interface subordonnée (61), permettant à l'appareil de commande prioritaire (2) et à un dispositif de commande subordonné (6) d'échanger en communication bidirectionnelle des données d'au moins un consommateur électrique (8) par les moyens de raccordement (4),
**caractérisé en ce que**
dans le cas d'une demande d'énergie émanant d'au moins un dispositif de commande subordonné (6) via un premier moyen de raccordement (4), au moins un autre moyen de raccordement (4) peut être désactivé et/ou activé de manière appropriée par au moins un moyen de commutation (23) de l'appareil de commande prioritaire (2), afin de satisfaire la demande d'énergie désirée.

2. Dispositif selon la revendication 1,
**caractérisé en ce que**
l'appareil de commande prioritaire (2) contient des moyens pour mémoriser (25) l'état d'au moins un dispositif de commande subordonné (6) et/ou d'au moins un consommateur électrique (8).

3. Dispositif selon l'une quelconque des revendications précédentes,
**caractérisé en ce que**
l'appareil de commande prioritaire (2) contient au moins un moyen prioritaire de détection de courant (21), qui détecte un courant total, circulant par au moins un moyen de commutation prioritaire (23), de tous les consommateurs électriques (8), actifs, reliés au même moyen de raccordement (4), et désactivé sélectivement ce moyen de commutation (4) lorsque le courant total qui circule dépasse une valeur limite prédéterminée.

4. Dispositif selon la revendication 1 ou 2,
**caractérisé en ce que**
le dispositif de commande subordonné (6) est équipé d'au moins un moyen subordonné de détection de courant (62), qui détecte le courant circulant par au moins un moyen de commutation subordonné (60) et le transmet à une logique de commutation subordonnée (63) pour exploitation, en fonction de laquelle le moyen de commutation subordonné (60) peut être commandé.

5. Dispositif selon l'une quelconque des revendications précédentes,
**caractérisé en ce que**
le dispositif de commande subordonné (6) contient un convertisseur de tension (64), utilisable comme source de tension pour détecter l'état d'éléments de commutation d'au moins un consommateur électrique (8), reliés au dispositif de commande subordonné (6).

6. Dispositif selon l'une quelconque des revendications précédentes,
**caractérisé en ce que**
des moyens subordonnés de détection de tension sont prévus dans au moins un dispositif de commande subordonné (6), pour la détection de la tension d'alimentation, d'au moins un consommateur électrique (8).

7. Dispositif selon la revendication 6,
**caractérisé en ce que**
les moyens subordonnés de détection de tension permettent une surveillance d'au moins un moyen de raccordement (4) entre deux dispositifs de commande subordonnés voisins (6).

8. Dispositif selon l'une quelconque des revendications précédentes,
**caractérisé en ce que**
dans au moins un dispositif de commande subordonné (6), des moyens de contact (66, 69) pour le raccordement avec au moins un moyen de raccordement (4) sont prévus pour exclure une inversion de polarité.

9. Dispositif selon l'une quelconque des revendications précédentes,
**caractérisé en ce que**
les données des dispositifs de commande subordonnés (6) sont échangeables entre elles par au moins un moyen de raccordement (4) dans le sens d'une communication directe.

10. Dispositif selon la revendication 9,
**caractérisé en ce que**
en liaison avec la communication directe entre des dispositifs de commande subordonnés (6), la fonction d'un consommateur électrique (8) désactivé, ou qui n'est plus activable, peut être reprise par un consommateur électrique (8) remplissant une fonction de remplacement.

11. Dispositif selon l'une quelconque des revendications précédentes,
**caractérisé en ce qu'**
au moins un moyen de raccordement (4) est en forme d'une ligne en bande plate avec au moins une ligne d'alimentation (41, 42) et/ou au moins une ligne de données (43, 44).

12. Dispositif selon la revendication 11,
**caractérisé en ce que**
la ligne en bande plate est réalisée sous la forme d'une ligne de dérivation, qui part d'un point neutre commun (2).

13. Dispositif selon l'une quelconque des revendications précédentes,
**caractérisé en ce que**
avec un réseau de bord à tensions multiples, un convertisseur de tension prioritaire (22) de l'appareil de commande prioritaire (2) alimente une autre ligne d'alimentation (42) d'au moins un moyen de raccordement (4) avec une autre tension par rapport à au moins une ligne d'alimentation (41).

14. Dispositif selon l'une quelconque des revendications précédentes,
**caractérisé en ce que**
l'autre ligne d'alimentation (42) d'au moins un moyen de raccordement (4) est conçue comme une ligne à courant permanent, alimentant des consommateurs (8) relatifs à la sécurité de manière redondante et/ou assure une alimentation de consommateurs électriques (8), qui doivent être actifs dans le véhicule (1) arrêté.
